Europäisches Patentamt

European Patent Office

Office européen des brevets

(19)

(11) Veröffentlichungsnummer : **0 146 651**
**B1**

(12) **EUROPÄISCHE PATENTSCHRIFT**

(45) Veröffentlichungstag der Patentschrift :
16.06.87

(21) Anmeldenummer : 83113066.1

(22) Anmeldetag : 23.12.83

(51) Int. Cl.⁴ : **E 05 D 7/10, B 62 D 33/02**

(54) Teilbares Scharnier zum Anbringen einer Bordwand am Rahmen von Lastfahrzeugen.

(43) Veröffentlichungstag der Anmeldung :
03.07.85 Patentblatt 85/27

(45) Bekanntmachung des Hinweises auf die Patenterteilung : 16.06.87 Patentblatt 87/25

(84) Benannte Vertragsstaaten :
AT BE CH DE FR GB IT LI NL

(56) Entgegenhaltungen :
CH-A- 531 436
DE-A- 3 110 106
FR-A- 2 406 560
US-A- 1 632 116

(73) Patentinhaber : F. HESTERBERG & SÖHNE GmbH & Co. KG
Heilenbecker Strasse 50-60
D-5828 Ennepetal 1 (DE)

(72) Erfinder : Nieland, Friedhelm
Bonkampstrasse 40
D-5805 Breckerfeld (DE)

(74) Vertreter : Kneissl, Richard, Dr.
Patentanwälte Andrae, Flach, Haug, Kneissl Steinstrasse 44
D-8000 München 80 (DE)

EP 0 146 651 B1

## Beschreibung

Die Erfindung betrifft ein teilbares Scharnier zum Anbringen einer Bordwand am Rahmen von Lastfahrzeugen, bestehend aus einem Teil mit einer einseitig befestigten waagrechten Achse (Achsenteil) und aus einem eine entsprechende Lagerbohrung aufweisenden Teil (Lagerteil) sowie aus einer Aushängesicherung, welche aus einem Ansatz besteht, der vom über die Lagerbohrung vorspringenden freien Ende der Achse rechtwinklig absteht, wobei die Lagerbohrung einen Querschnitt aufweist, in den der Querschnitt durch die Achse und den Ansatz nur bei einer bestimmten gegenseitigen Orientierung paßt.

Ein Scharnier der vorstehend beschriebenen Art ist aus DE-A-31 10 106 bekannt. Bei dieser Aushängesicherung geht die Lagerbohrung des Lagerteils durch zwei räumlich voneinander getrennte Blöcke hindurch. Die Lagerbohrung besitzt einen zylindrischen Querschnitt mit einer davon ausgehenden Ausbuchtung, in welche der Ansatz an der Achse hineinpaßt. In den beiden Blöcken ist diese Ausbuchtung winkelmäßig voneinander versetzt. Zum Teilen des Scharniers wird das Achsenteil gegenüber dem Lagerteil so verschwenkt, daß der Ansatz an der Achse mit der Ausbuchtung im benachbarten Block fluchtet. Nachdem das Achsenteil axial verschoben worden ist, wird es verschwenkt, so daß der Ansatz an der Achse nunmehr mit der Ausbuchtung in dem anderen Block fluchtet, so daß eine weitere axiale Verschiebung, zum völligen Trennen des Lagerteils vom Achsenteil ermöglicht wird.

Der Erfindung liegt die Aufgabe zugrunde, bei einem teilbaren Scharnier der eingangs bezeichneten Art die Aushängesicherung so abzuwandeln, daß bei Bedarf ein müheloses Aushängen der Bordwand gestattet wird, aber trotzdem in jeder Abklappstellung der Bordwand ein unbeabsichtigtes Aushängen derselben verhindert wird.

Die Aufgabe wird gemäß der Erfindung dadurch gelöst, daß bei einem solchen teilbaren Scharnier die Lagerbohrung die Form eines Langlochs aufweist und daß die Orientierungen des Ansatzes und des Langlochs derart verlaufen, daß bei gleicher Orientierung das Langloch nur dann über den Ansatz geschoben werden kann, wenn die Bordwand gegen die Schwerkraft angehoben worden ist.

Die erfindungsgemäße Aushängesicherung ist gegenüber der bekannten wesentlich einfacher aufgebaut. Außerdem ist eine zusätzliche Sicherung dadurch gegeben, daß der Ansatz nur dann durch das Langloch hindurchgeht, nachdem die Bordwand angehoben worden ist.

Bei einer bevorzugten Ausführungsform entspricht der Ansatz hinsichtlich seiner Breite dem Durchmesser der Achse, wobei er außerdem an seinem freien Ende mit einer dem Radius der Achse entsprechenden Abrundung versehen ist. Diese Ausbildung des Ansatzes gewährleistet, daß die Bordwand nur in einer ganz bestimmten Abklappstellung ausgehängt werden kann.

Bei einer bevorzugten Ausführungsform ist das Achsenteil am Fahrzeugrahmen und das Lagerteil an der Bordwand befestigt, wobei das Langloch sich bei hochgeklappter Stellung in horizontaler Richtung erstreckt und wobei der Ansatz nach oben weist. Dabei kann der Ansatz, solange er nur nach oben weist, in bezug auf die Horizontale verschiedene Orientierungen einnehmen. Eine Möglichkeit ist senkrecht nach oben. In diesem Fall muß zum Aushängen der Bordwand diese um 90° abgeklappt und dann angehoben werden, worauf die Lagerbohrung des Lagerteils über den Ansatz an der Achse des Achsenteils geschoben werden kann. Eine andere Möglichkeit ist mit einem Winkel von 45° zur Horizontalen, und zwar vom Fahrzeugrahmen weg schräg nach oben. Bei einer solchen Ausbildung muß die Bordwand um 135° abgeklappt und dann angehoben werden, damit ein Aushängen der Bordwand möglich ist.

Bei dieser Ausführungsform wird es außerdem bevorzugt, daß am Lagerteil ein Vorsprung vorgesehen ist, der bei hochgeklappter Bordwand am Fahrzeugrahmen anliegt und das dem Fahrzeugrahmen zugewandte Ende des Langlochs in der Nachbarschaft der Achse hält und vorzugsweise sogar gegen die Achse drückt. Hierdurch wird ein Hin- und Herrutschen des Lagerteils auf der Achse und eine damit verbundene Geräuschentwicklung zuverlässig verhindert. In diesem Fall ist es günstig, wenn am Vorsprung eine Auflauffläche vorhanden ist, so daß beim Hochklappen der Bordwand das dem Fahrzeug zugewandte Ende des Langlochs allmählich gegen die Achse geschoben wird.

Bei einer anderen Ausführungsform ist das Lagerteil am Rahmen und das Achsenteil an der Bordwand zu befestigen, wobei das Langloch sich in vertikaler Richtung erstreckt und der Ansatz bei hochgeklappter Bordwand zur Seite oder mit einem Winkel von 45° zur Horizontalen vom Fahrzeugrahmen weg schräg nach oben weist. Je nach der Orientierung des Ansatzes muß zum Aushängen der Bordwand diese um einen Winkel von 90 oder 135° abgeklappt und dann angehoben werden, bevor der Ansatz durch das Langloch hindurchpaßt und die Bordwand ausgehängt werden kann.

Bei dieser Ausführungsform wird es weiterhin bevorzugt, daß am Lagerteil Nasen vorgesehen sind, die bei hochgeklappter Stellung der Bordwand im Flansch des Achsenteils vorgesehene Löcher, die zum Anschrauben des Achsenteils an die Bordwand dienen, abdecken. Diese Nasen dienen als Zollsicherung. Sie verhindern es, daß die hochgeklappte Bordwand, die Teil eines durch eine Zollplombe gesicherten Fahrzeugaufbaus ist, vom Scharnier abgeschraubt werden kann, um so ohne Beschädigung der Zollplombe an das Transportgut zu gelangen. Es ist dabei auch vorteilhaft, wenn am Achsenteil ein Zapfen vorgesehen ist, der bei hochgeklappter Bordwand unmittelbar unter einer der Nasen liegt. Der Zapfen verhindert, daß bei hochgeklappter Bordwand die Achse in dem sich in vertikaler Richtung erstreckenden Langloch und damit die gesamte Bordwand angehoben werden kann.

Zwei Ausführungsformen des erfindungsgemäßen teilbaren Scharniers werden nun anhand der beigefügten Zeichnungen näher erläutert.

Figur 1 zeigt eine Ausführungsform bei halb abgeklappter Bordwand, wobei das Achsenteil am Rahmen und das Lagerteil an der Bordwand befestigt ist und ein Aushängen der Borwand nur in einer um 90° abgeklappten Stellung möglich ist.

Figur 2 zeigt eine Ausführungsform bei hochgeklappter Bordwand, wobei das Lagerteil am Rahmen und das Achsenteil an der Bordwand befestigt ist und ein Aushängen nur nach Abklappen der Bordwand um 135° möglich ist.

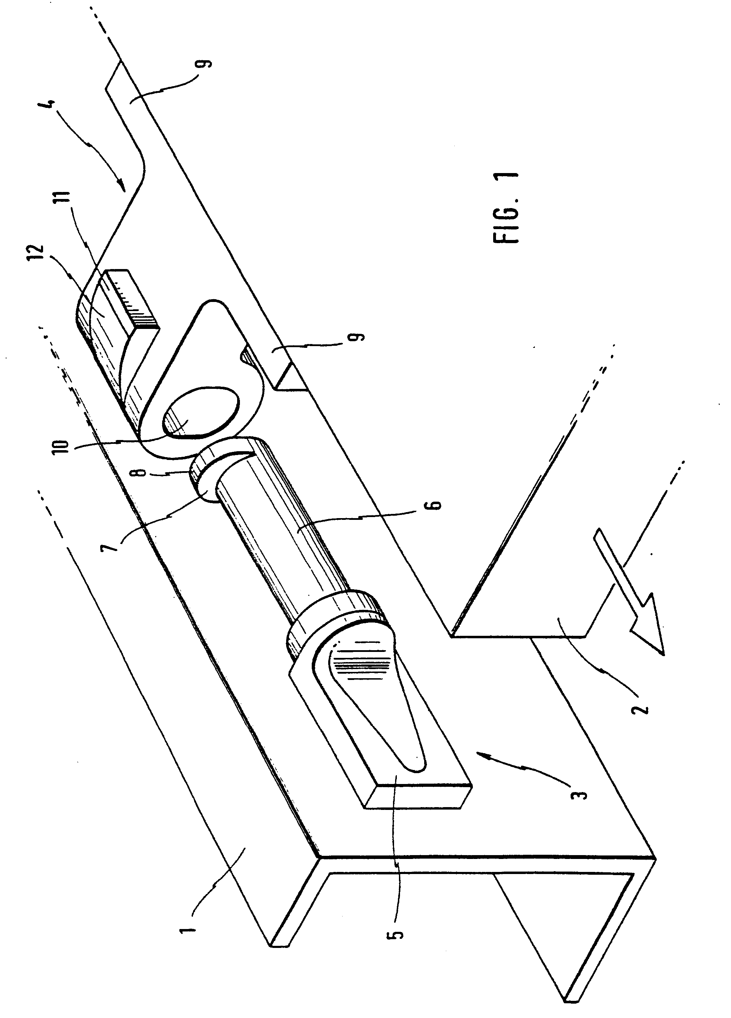

Fig. 1 zeigt einen Abschnitt eines Fahrzeugrahmens 1 und einer Bordwand 2 in schematischer Darstellung. Am Fahrzeugrahmen 1 ist ein Achsenteil 3 befestigt, das im wesentlichen aus einem Achsenhalter 5 und einer daran befestigten waagrechten Achse 6 besteht. Der Achsenhalter 5 wird üblicherweise am Fahrzeugrahmen 1 festgeschweißt. An ihrem freien Ende trägt die Achse 6 einen nach oben weisenden Ansatz 7 mit einer Abrundung 8, deren Krümmungsradius demjenigen der Achse 6 entspricht. An der Bordwand 2 ist ein Lagerteil 4 befestigt. Das Lagerteil 4 weist einen Flansch 9 auf, der üblicherweise mit Hilfe von Schrauben, die durch im Flansch 9 vorgesehene Löcher (nicht dargestellt) hindurchgehen, befestigt wird. Das Lagerteil 4 besitzt eine Lagerbohrung 10 in Form eines Langlochs mit horizontaler Orientierung, das so bemessen ist, daß die Bordwand in halb abgeklappter Stellung nach Anheben über den Ansatz 7 an der Achse geschoben werden kann, so daß nur in dieser Stellung ein Aushängen der Bordwand möglich ist. Auf der in hochgeklappter Stellung dem Fahrzeugrahmen 1 zugewandten Seite besitzt das Achsenteil 4 einen Vorsprung 11 mit einer Auflauffläche 12. Der Vorsprung 11 kommt beim Hochklappen der Bordwand in Anlage an den Fahrzeugrahmen 1 und drückt das Lagerteil 4 dabei so zur Seite, daß das dem Fahrzeugrahmen zugewandte Ende des Langlochs 10 in Anlage an die Achse 6 kommt, wodurch verhindert wird, daß die Lagerbohrung 10 auf der Achse hin- und hergleitet und es beim Fahren zu einer Geräuschentwicklung kommt.

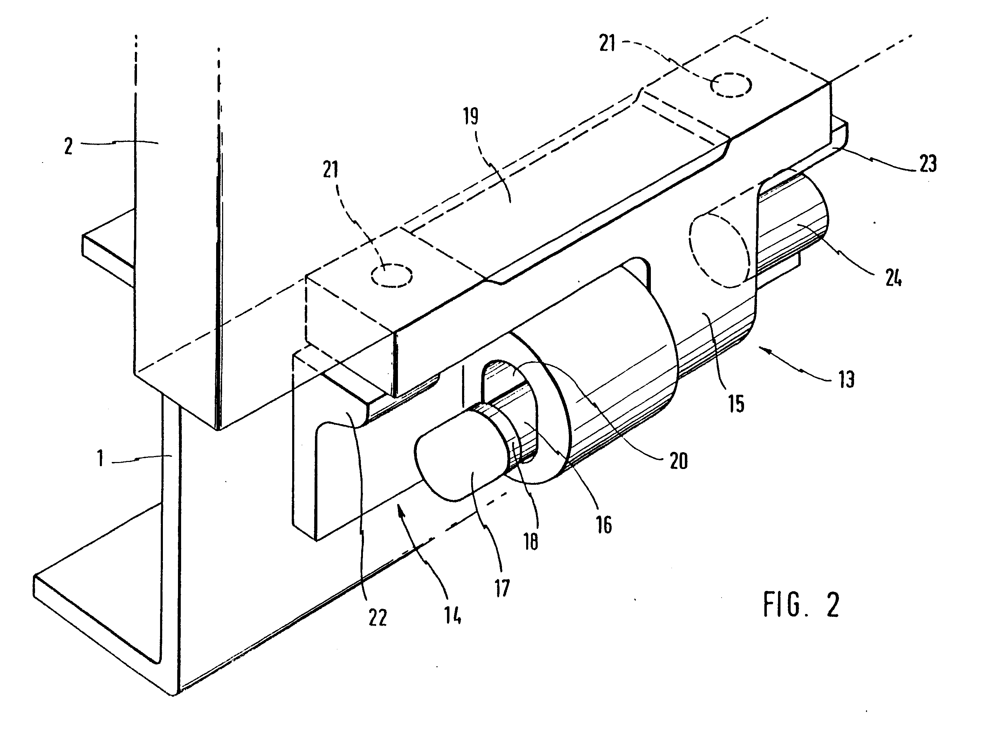

Fig. 2 zeigt ebenfalls den Fahrzeugrahmen 1 und die Bordwand 2, hier in hochgeklappter Stellung. Ein Achsenteil 13 besitzt einen Achsenhalter 15 und eine daran befestigte waagrechte Achse 16. Der Achsenhalter 15 ist seinerseits an einem Flansch 19 befestigt, der Löcher 21 aufweist, mit deren Hilfe der Flansch an der unteren Stirnseite der Bordwand 2 angeschraubt werden kann. An seinem freien Ende trägt die Achse 16 einen mit einem Winkel von 45° schräg nach oben weisenden Ansatz 17 mit einer Abrundung 18, deren Krümmungsradius demjenigen der Achse 16 entspricht. Ein Lagerteil 14 ist am Fahrzeugrahmen 1 angeschweißt. Es besitzt eine Lagerbohrung 20 in Form eines vertikal orientierten Langlochs. Das Langloch ist so bemessen, daß es in einer um 135° abgeklappten Stellung über den Ansatz 17 auf der Achse 16 geschoben werden kann, um die Bordwand auszuhängen. Weiterhin sind am Lagerteil Zollsicherungsnasen 22, 23 vorgesehen, welche die Unterseite der Löcher 21 abdecken, so daß bei hochgeklappter und in dieser Stellung plombierter Bordwand letztere nicht vom Achsenteil abgeschraubt werden kann.

Ein am Achsenhalter 15 des Achsenteils 13 vorgesehener Zapfen 24 liegt bei hochgeklappter Bordwand mit nur geringem Spiel unter der Zollsicherungsnase 23 und verhindert, daß in dieser Stellung das Achsenteil 13 in bezug auf das Lagerteil 14 angehoben werden kann, was ja bei Fehlen des Zapfens 24 auf Grund des sich in vertikaler Richtung erstreckenden Langlochs 20 möglich wäre.

## Patentansprüche

1. Teilbares Scharnier zum Anbringen einer Bordwand (2) am Rahmen (1) von Lastfahrzeugen, bestehend aus einem Teil (3, 13) mit einer einseitig befestigten waagrechten Achse (6, 16) (Achsenteil) und aus einem eine entsprechende Lagerbohrung (10, 20) aufweisenden Teil (4, 14) (Lagerteil) sowie aus einer Aushängesicherung, welche aus einem Ansatz (7, 17) besteht, der vom über die Lagerbohrung (10, 20) vorspringenden freien Ende der Achse (6, 16) rechtwinklig absteht, wobei die Lagerbohrung (10, 20) einen Querschnitt aufweist, in den der Querschnitt durch die Achse (6, 16) und den Ansatz (7, 17) nur bei einer bestimmten gegenseitigen Orientierung paßt, dadurch gekennzeichnet, daß die Lagerbohrung (10, 20) die Form eines Langlochs aufweist und daß die Orientierungen des Ansatzes (7, 17) und des Langlochs (10, 20) derart verlaufen, daß bei gleicher Orientierung das Langloch (10, 20) nur dann über den Ansatz (7, 17) geschoben werden kann, wenn die Bordwand (3) gegen die Schwerkraft angehoben worden ist.

2. Scharnier nach Anspruch 1, dadurch gekennzeichnet, daß der Ansatz (7, 17) hinsichtlich seiner Breite dem Durchmesser der Achse (6, 16) entspricht und an seinem freien Ende mit einer dem Radius der Achse (6, 16) entsprechenden Abrundung (8, 18) versehen ist.

3. Scharnier nach Anspruch 1 oder 2, dadurch gekennzeichnet, daß das Achsenteil (3) am Fahrzeugrahmen (1) und das Lagerteil (4) an der Bordwand zu befestigen ist, daß das Langloch (10) sich bei hochgeklappter Bordwand (2) in horizontaler Richtung erstreckt und daß der Ansatz (7) nach oben weist.

4. Scharnier nach Anspruch 3, dadurch gekennzeichnet, daß der Ansatz (7) bei hochgeklappter Bordwand (2) senkrecht nach oben oder mit einem Winkel von 45° zur Horizontalen vom Fahrzeugrahmen (1) weg schräg nach oben weist.

5. Scharnier nach Anspruch 3 oder 4, dadurch gekennzeichnet, daß am Lagerteil (4) ein Vorsprung (11) vorgesehen ist, der bei hochgeklappter Bordwand (2) am Fahrzeugrahmen (1) anliegt und das dem Fahrzeugrahmen (1) zugewandte Ende des Langlochs (10) in Nachbarschaft der Achse (6) hält.

6. Scharnier nach Anspruch 5, dadurch gekennzeichnet, daß der Vorsprung (11) eine Auflauffläche (12) aufweist.

7. Scharnier nach Anspruch 1 oder 2, dadurch gekennzeichnet, daß das Lagerteil (14) am Rahmen (1) und das Achsenteil (13) an der Bordwand (2) zu befestigen ist, daß das Langloch (20) sich in vertikaler Richtung erstreckt und daß der Ansatz (17) bei hochgeklappter Bordwand (2) zur Seite oder mit einem Winkel von 45° zur Horizontalen vom Fahrzeugrahmen (1) weg schräg nach oben weist.

8. Scharnier nach Anspruch 7, dadurch gekennzeichnet, daß am Lagerteil (14) Nasen (22, 23) vorgesehen sind, die bei hochgeklappter Bordwand (2) im Flansch (19) des Achsenteils (13) vorgesehene Löcher (21), die zum Anschrauben des Achsenteils (13) an die Bordwand (2) dienen, abdecken.

9. Scharnier nach Anspruch 8, dadurch gekennzeichnet, daß am Achsenteil (13) ein Zapfen (24) vorgesehen ist, der bei hochgeklappter Bordwand (2) unmittelbar unter einer der Nasen (23) liegt.

**Claims**

1. Divisible hinge for attaching a side or tail board (2) to the frame (1) of truck vehicles, consisting of a member (3, 13) having a unilaterally secured horizontal shaft (6, 16) (shaft member) and a member (4, 14) (bearing member) having a corresponding bearing bore (10, 20) and of an unhooking securing means which consists of a lug (7, 17) which projects at right angles from the free end of the shaft (6, 16) projecting beyond the bearing bore (10, 20), the bearing bore (10, 20) having a cross-section into which the cross-section through the shaft (6, 16) and the lug (7, 17) fits only in a predetermined mutual orientation, characterized in that the bearing bore (10, 20) has the form of an elongated hole and that the orientations of the lug (7, 17) and the elongated hole (10, 20) extend so that with equal orientation the elongated hole (10, 20) can be pushed over the lug (7, 17) only when the side board or tail gate (3) has been lifted up against the force of gravity.

2. Hinge according to claim 1, characterized in that the lug (7, 17) corresponds in width to the diameter of the shaft (6, 16) and is provided at its free end with a rounded portion (8, 18) corresponding to the radius of the shaft (6, 16).

3. Hinge according to claim 1 or 2, characterized in that the shaft member (3) is to be secured to the vehicle frame (1) and the bearing member (4) to the tail gate such that the elongated hole (10) when the tail gate (2) is raised extends in the horizontal direction and that the lug (7) points upwardly.

4. Hinge according to claim 3, characterized in that the lug (7) when the tail gate (2) is raised points vertically upwardly or with an angle of 45° to the horizontal obliquely upwardly from the vehicle frame (1).

5. Hinge according to claim 3 or 4, characterized in that on the bearing member (4) a projection (11) is provided which with raised tail gate (2) bears on the vehicle frame (1) and holds the end of the elongated hole (10) facing the vehicle frame (1) in the vicinity of the shaft (6).

6. Hinge according to claim 5, characterized in that the projection (11) has a runup face (12).

7. Hinge according to claim 1 or 2, characterized in that the bearing member (14) is secured to the frame (1) and the shaft member (13) to the tail gate (2) such that the elongated hole (20) extends in a vertical direction and the lug (17) when the tail gate (2) is raised points to one side or obliquely upwardly at an angle of 45° to the horizontal away from the vehicle frame (1).

8. Hinge according to claim 7, characterized in that on the bearing member (14) noses (22, 23) are provided which when the tail gate (2) is raised cover holes (21) which are provided in the flange (19) of the shaft member (13) and serve for screwing the shaft member (13) to the tail gate (2).

9. Hinge according to claim 8, characterized in that on the shaft member (13) a pin (24) is provided which when the tail gate (2) is raised lies directly beneath one of the noses (23).

**Revendications**

1. Charnière démontable pour la mise en place d'une ridelle (2) sur le châssis (1) de véhicules de charge, cette charnière se composant d'une partie (3, 13) munie d'un axe (6, 16) horizontal, fixé d'un côté (partie portant l'axe) et d'une partie (4, 14) qui présente un alésage (10, 20) de palier correspondant (partie palier), ainsi que d'une sécurite contre le décrochement, consistant en une saillie (7, 17) qui s'écarte, à angle droit, de l'extrémité libre de l'axe (6, 16) qui dépasse au-delà de l'alésage de palier (10, 20), l'alésage de palier (10, 20) présentant une section dans laquelle l'axe (6, 16) et la saillie (7, 17) ne sont adaptés qu'avec une orientation réciproque déterminée et étant caractérisée par le fait que l'alésage de palier (10, 20) présente la forme d'un trou allongé et que l'orientation de la saillie (7, 17) et celle du trou allongé (10, 20) se présentent de telle sorte qu'avec une même orientation le trou allongé (10, 20) ne peut être poussé au-dessus de la saillie (7, 17) que lorsque la ridelle (3) a été soulevée contre la force de pesanteur.

2. Charnière selon la revendication 1, caractérisée par le fait que la saillie (7, 17) correspond, pour sa largeur, au diamètre de l'axe (6, 16) et est munie à son extrémité libre d'un arrondi (8, 18) dont le rayon de courbure correspond à celui de l'axe (6, 16).

3. Charnière selon la revendication 1 ou 2, caractérisée par le fait que la partie (3) portant l'axe est à fixer au châssis (1) du véhicule et la pièce de palier (4), à la ridelle ; que le trou allongé (10) s'étend en direction horizontale, quand la ridelle (2) est complètement relevée ; et que la saillie (7) est dirigée vers le haut.

4. Charnière selon la revendication 3, caractérisée par le fait que lorsque la ridelle (2) est complètement relevée, la saillie (7) est tournée verticalement vers le haut ou est tournée obliquement vers le haut en s'écartant du châssis (1) du véhicule avec un angle de 45° par rapport à l'horizontale.

5. Charnière selon la revendication 3 ou 4, caractérisée par le fait qu'un ergot (11) est prévu sur la partie de palier (4), lequel ergot s'appuie contre le châssis (1) du véhicule lorsque la ridelle (2) est complètement relevée, et maintient au voisinage de l'axe (6), l'extrémité du trou allongé (10) tournée vers le châssis (1) du véhicule.

6. Charnière selon la revendication 5, caractérisée par le fait que l'ergot (11) présente une surface (12) en forme de rampe.

7. Charnière selon la revendication 1 ou 2, caractérisée par le fait que la pièce de palier (14) est à fixer au châssis (1) et la pièce (13) portant l'axe, à la ridelle (2) ; que le trou allongé (20) s'étend en direction verticale ; et que la saillie (17) est tournée vers le côté quand la ridelle (2) est complètement relevée, ou est tournée obliquement vers le haut en s'écartant du châssis (1) du véhicule avec un angle de 45°.

8. Charnière selon la revendication 7, caractérisée par le fait que, sur la partie de palier (14), sont prévus des talons (22, 23) recouvrant, lorsque la ridelle (2) est complètement relevée, des trous (21), prévus dans la partie plate (19) de support de la partie (13) portant l'axe, et qui servent à visser sur la ridelle la partie (13) portant l'axe.

9. Charnière selon la revendication 8, caractérisée par le fait que, sur la pièce (13) portant l'axe, est prévu un bloc cylindrique (24) qui se trouve juste sous un des talons (23).

FIG. 1

FIG. 2

0 146 651